# EUROPÄISCHE PATENTANMELDUNG

(11) **EP 0 604 756 A1**
(43) Veröffentlichungstag der Anmeldung: **06.07.1994**
(21) Anmeldenummer: 93118727.2
(22) Anmeldetag: 22.11.1993
(51) Int. Cl.: G01G 3/142

(54) **Schnittstelle bei eichfähigen elektromechanischen Waagen**

(30) Priorität: 29.12.1992 DE 4244394
(71) Anmelder: PIETZSCH AUTOMATISIERUNGSTECHNIK GMBH, D-76275 Ettlingen (DE)
(72) Erfinder: Horn, Klaus, Prof.Dr.-Ing., D-38126 Braunschweig (DE)
(74) Vertreter: Geitz, Heinrich, Dr.-Ing.

(57) **Zusammenfassung**

Es wird eine rückwirkungsfreie analoge Schnittstelle bei eichfähigen elektromechanischen Waagen für den Anschluß nicht eichfähiger Signalverarbeitungsgeräte angegeben, die auf die Auswertung dynamischer Signalanteile in den Ausgangssignalen der Wägezellen ausgelegt sind. Kennzeichnend für die Schnittstelle ist, daß auf jede Speisespannungszuleitung und jeden Meßsignalausgang aller Wägezellen einer Waage ein Koppelverstärker mit sehr hohem Eingangswiderstand geschaltet ist. Ausgangsseitig vermitteln diese Koppelverstärker den Anschluß der nicht eichfähigen Signalverarbeitungsgeräte für die Verwertung dynamischer Anteile in den Meßsignalen.

## Beschreibung

Die Erfindung bezieht sich auf eine Schnittstelle bei eichfähigen elektromechanischen Waagen für den Anschluß nicht eichfähiger Signalverarbeitungsgeräte, die auf die Auswertung dynamischer Signalanteile in den Ausgangssignalen der Wägezellen ausgelegt sind.

Elektromechanische Waagen für den eichpflichtigen Verkehr sind in der Regel mit Wägezellen ausgerüstet, bei denen die Signalbildung mittels in Brücken geschalteter Dehnungsmeßstreifen erfolgt. Dabei werden in der Mehrzahl aller Einsatzfälle die Meßbrücken mit Gleichspannung versorgt, in geringerem Umfange aber auch mit sinusförmigen oder rechteckförmigen Wechselspannungen. In den letztgenannten Fällen kommt dann in der einen oder anderen Variante ein Trägerfrequenz-Meßverfahren für die Meßsignalverarbeitung in Frage, die in speziellen Auswerteschaltungen erfolgt.

An die Funktionssicherheit derartiger Auswerteschaltungen werden bei eichfähigen Waagen extrem hohe Ansprüche gestellt. Insofern besteht im gesamten Schaltungsaufbau die Forderung, daß nur besonders zuverlässige Bauelemente, Kabelführungen, Kabelverbindungen und elektronische Bauteile zum Einsatz gelangen.

Steck- oder Klemmverbindungen sowie vermeidbare Schalterstrecken, wie Umschalter, Relais oder dergleichen, genügen insbesondere dann den vorstehenden Forderungen nicht, wenn diese sich in den Leitungspfaden analoger Meß- und Versorgungsspannungskreise befinden.

Dehnungsmeßstreifen-Wägezellen sind aufgrund ihrer hohen Federsteife in der Lage, bei allen praktischen Waagenausführungen neben dem gewünschten Signalanteil für die statischen Gewichtskraftskomponenten der zu verwägenden Nutzlasten auch noch dynamische Anteile bis zu recht hohen Frequenzen zu liefern. Diese dynamischen Signalanteile haben den Vorgang der Lastauflage, die nachfolgenden mechanischen Einschwingvorgänge in die stationäre Ruhelage zur Ursache, desgleichen mannigfaltige dynamische Störeinwirkungen aus der Umgebung, wie beispielsweise Erschütterungen des Untergrundes über die Widerlager der Wägezellen, und nicht zuletzt auch Eigenschwingungen des zu vermessenden Wägegutes. Deshalb ist bei praktisch allen Ausführungsarten dieser elektromechanischen Waagen an geeigneten Stellen der Auswägevorrichtung dafür gesorgt, daß mit analogen oder digitalen Filtern oberhalb einer mehr oder weniger tief liegenden Grenzfrequenz alle dynamischen Komponenten unterdrückt werden und so keinen Einfluß mehr auf das von der Waage ausgewiesene Wägeergebnis haben.

Die Meßwertausgabe eichfähiger elektromechanischer Waagen vermag somit keine Informationen über den zeitlichen Verlauf dynamischer Komponenten, die im Meßsignalausgang der Wägezellen mit enthalten sind, zu liefern. Damit ist aber auch fest vorgegeben, daß die bei vielen eichfähigen Waagen vorgesehenen und auch zugelassenen Schnittstellen, die vorzugsweise digital ausgebildet sowie für den Anschluß von Druckern, Steuerungsanlagen, Rechnern oder dergleichen ausgelegt und bestimmt sind und denen die angegebenen Meßwerte zugeleitet werden, nicht den Anschluß solcher Einrichtungen ermöglichen, die den Verlauf der erwähnten dynamischen Kräfte in der einen oder anderen Form verwerten und auswerten können.

Bei eichfähigen Waagen der hier erörterten Art ist zum Beispiel die Anzeige und Sicherheitsabschaltung bei unzulässigen kurzzeitigen Belastungs- und Überlastungsspitzen nicht möglich. Ebensowenig ist es bei derartigen Waagen möglich, Wägeobjekte während einer mehr oder weniger raschen Bewegung über eine Wägeplattform zu verwägen, also beispielsweise fahrende Fahrzeuge.

Demgemäß besteht die Aufgabe der vorliegenden Erfindung darin, eine Möglichkeit aufzuzeigen, wie ohne Änderungen an dem von den staatlichen Zulassungsbehörden für den eichfähigen Verkehr genehmigten Schaltungsaufbau der Auswägeeinrichtungen von elektromechanischen Waagen zusätzlich nicht eichfähige Signalverarbeitungsgeräte, die auf die Nutzung der in den Ausgangssignalen der Wägezellen enthaltenen dynamischen Signalanteile ausgelegt sind, angeschlossen werden können.

Gelöst ist diese Aufgabe dadurch, daß die Schnittstelle nach dem Oberbegriff des Patentanspruchs 1 als rückwirkungsfreie analoge Schnittstelle ausgebildet ist, indem die Speisespannungszuleitungen und die Meßsignalausgänge aller Wägezellen einer eichfähigen Waage auf je einen Eingang eines ausgangsseitig den Anschluß nicht eichfähiger und für die Verwertung dynamischer Signalanteile geeigneter Signalverarbeitungsgeräte vermittelnden Koppelverstärkers mit sehr hohem Eingangswiderstand geschaltet sind.

Bei der Erfindung handelt es sich somit darum, daß jedem Meßsignalausgang und jeder Speisespannungszuleitung der in der Regel parallel zueinander geschalteten Wägezellen einer elektromechanischen Waage ein Koppelverstärker mit hohem Eingangswiderstand nachgeschaltet ist, dessen Ausgang jeweils den Anschluß einer dynamischen Auswägeeinrichtung mit auf die Auswertung dynamischer Signalanteile ausgelegten Signalverarbeitungsgeräten ermöglicht. Der Schaltungsaufbau der eichfähigen Auswägevorrichtung ist durch die auf die Speisespannungsleitungen und Meßsignalausgänge der Wägezellen geschalteten Koppelverstärker in keiner Weise verändert, sondern lediglich erweitert.

Angesichts der hochohmigen Eingangswiderstände der Koppelverstärker sind die Wägezellen einer Waage hinsichtlich etwaiger Rückwirkungen von den über die Koppelverstärker angeschlossenen Signalverarbeitungsgeräten einer dynamischen Auswägevorrichtung abgekoppelt. Dabei haben sich Eingangswiderstände der Koppelverstärker von mindestens 100 Meg-Ohm als sehr sinnvoll erwiesen, desgleichen auch die Verwendung von Operationsverstärkern in C-MOS Technologie als Koppelverstärker.

Eine besonders zweckmäßige Weiterbildung der Erfindung sieht die Schaltung der Koppelverstärker als Spannungsfolger vor. Infolge der vollständigen Gegenkopplung einer derartigen Spannungsfolgerschaltung wird der von Hause aus schon sehr hohe Eingangswiderstand der Koppelverstärker noch einmal um deren Leerlaufverstärkungsfaktor vergrößert. Dies hat zur Folge, daß die Spannungs- und Signalpfade der Verbindungsleitungen der Wägezellen zu der eichfähigen Auswerteeinrichtung nur mit zusätzlichen Ableitungen von mehr als 10¹² Ohm belastet sind.

Eine derartig hochohmige Belastung kann angesichts von Innenwiderständen moderner Wägezellen, die der Größenordnung nach von 120 Ohm bis maximal etwa 5000 Ohm betragen, auch bei extrem hohen Genauigkeitsanforderungen als effektiv rückwirkungsfrei bezeichnet werden.

Aufgrund ihres hohen Gegenkopplungsgrades haben die Koppelverstärker ausgangsseitig sehr niederohmige dynamische Innenwiderstände von beispielsweise etwa 10 Ohm. Demgemäß können die ausgangsseitig an den Koppelverstärkern auftretenden Spannungssignale problemlos von einer nachfolgenden Auswerteeinrichtung genutzt werden, die auf die Verarbeitung der dynamischen Signalkomponentnen ausgelegt ist.

Um die erfindungsgemäße Rückwirkungsfreiheit auch bei Fehlfunktionen der Koppelverstärker zu gewährleisten, wie insbesondere bei einem starken Rückgang der Leerlaufverstärkung der Koppelverstärker, sieht eine andere wichtige Weiterbildung der Erfindung vor, daß den meßseitigen Eingängen der Verstärker jeweils ein sehr hochohmiger Schutzwiderstand vorgeschaltet ist.

Die den Koppelverstärkern meßseitig vorgeschalteten Schutzwiderstände können so bemessen sein, daß selbst bei eingangsseitigen Kurzschlüssen zwischen den Eingangsklemmen eines nachfolgenden Koppelverstärkers Rückwirkungen auf die bestehende eichfähige statische Auswägeeinrichtung unterbunden werden oder allenfalls zu Nullpunktsverschiebungen bzw. zu Empfindlichkeitsbeeinträchtigungen führen, die kleiner als ein Drittel der Fehlergrenzen der Auswägeeinrichtung bleiben. Etwaige Rückwirkungen auf die Auswägeeinrichtung sind somit praktisch bedeutungslos.

Diese Ausgestaltung kann auch so getroffen sein, daß die Schutzwiderstände, die zwischen den Meßsignalausgängen der Wägezellen und den zugeordneten Koppelverstärkern eingeschaltet sind, in ihrer Höhe derart begrenzte Widerstandswerte aufweisen, daß ein Kurzschluß zwischen einer Eingangsklemme eines nachfolgenden Koppelverstärkers und jeweils einer der beiden zugehörigen positiven bzw. negativen Spannungsversorgungsklemmen den Nullpunkt der eichfähigen Waage soweit verschiebt, daß diese Verschiebung dem Benutzer eindeutig erkennbar wird und/oder über den Einstellbereich der Nullstellvorrichtung dieser Waage hinausgeht.

Koppelverstärkern der zwecks Ausbildung der erfindungsgemäßen Schnittstelle in die Speisespannungszuleitungen und die Meßsignalausgänge aller Wägezellen einer elektromechanischen Waage eingeschalteten Art haftet eine gewisse Schwäche im Offsetverhalten an. Insoweit sieht eine nochmalige Weiterbildung der Erfindung vor, daß jeder Koppelverstärker mit einem Abgleichtrimmer zur Verbesserung des Offsetverhaltens versehen ist und daß mittels dieser Abgleichtrimmer der Grundoffset der Koppelverstärker zum Verschwinden gebracht wird.

Es verbleiben dann lediglich noch gewisse alterungs- oder temperaturbedingte kleine Offsetdriften, die aber den Aussteuerungsbereich und damit die Funktion derartiger Verstärker nicht beeinträchtigen können. Ohne Gegenmaßnahmen können indessen derartige Offsetdriften zu Nullpunktverschiebungen führen, die nach ihrem Vorzeichen und ihrer Größe von den Auswerteschaltungen der an die Ausgänge der Koppelverstärker angeschlossenen dynamischen Signalverarbeitungsgeräte nicht mehr beherrscht werden und/oder bei hohen Genauigkeitsanforderungen an letztere nicht mehr einfach vernachlässigbar sind. Aus diesen Gründen muß in der nachfolgenden dynamischen Auswerteschaltung dafür gesorgt werden, daß möglichst nach jeder dynamischen Beanspruchung einer Wägebrücke eine automatische Nullstellung durchgeführt wird, wenn vom Betriebsablauf her sichergestellt ist, daß zum Nullstellungszeitpunkt die Wägeanlage ohne Nutzlast ist. Dies bedarf indessen, weil nicht zur vorliegenden Erfindung gehörend, keiner weiteren und ins Detail gehenden Erörterung.

Ein besonders wichtiger Vorteil der rückwirkungsfreien analogen Schnittstelle nach der Erfindung besteht darin, daß sie bei entsprechender Spannungsversorgung der Koppelverstärker gleichermaßen bei gleichspannungs- und trägerfrequenzgespeisten eichfähigen Wägeschaltungen eingesetzt werden kann.

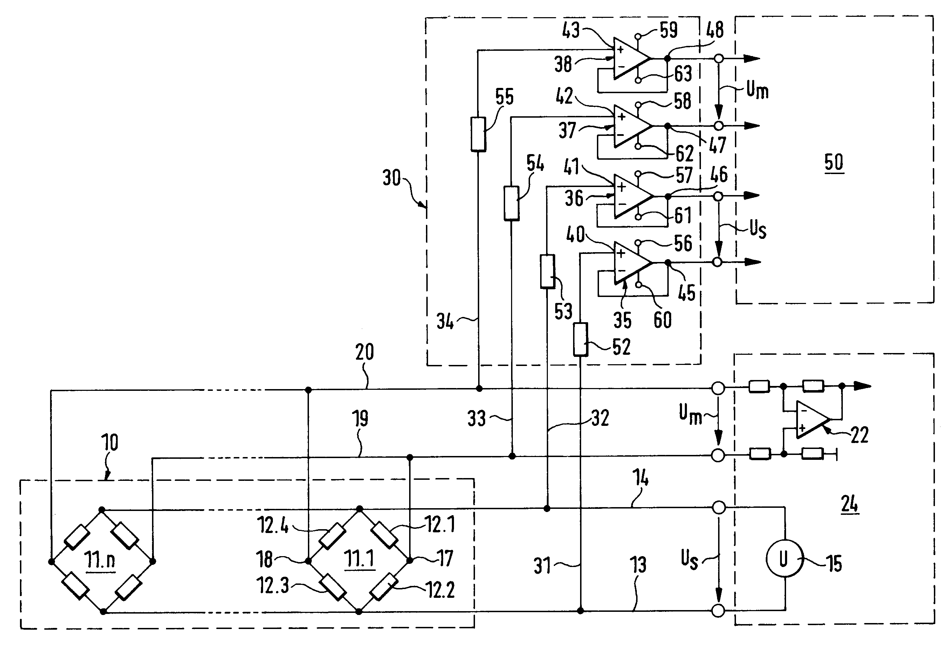

Anhand des in der beigefügten Zeichnung dargestellten Schaltplans soll nachstehend in Verbindung mit einer elektromechanischen Waage, die parallelgeschaltete Wägezellen aufweist, eine Ausführungsform der erfindungsgemäßen Schnittstelle für den rückwirkungsfreien Anschluß einer dynamischen Auswägevorrichtung mit Signalverarbeitungsgeräten zum Auswerten dynamischer Signalanteile in den Ausgangssignalen der Wägezellen erläutert werden.

Die elektromechanische Waage besitzt eine Wägeplattform 10 mit mehreren parallel zueinander geschalteten Wägezellen 11.1 bis 11.n . Es handelt sich dabei um Wägezellen mit jeweils vier in einer Wheatstone'schen-Brückenschaltung zusammengefaßten Dehnungsmeßstreifen 12.1 bis 12.4, die auf die eigentlichen Meßfederelemente der Wägezellen aufgeklebt sind, welche unterseitig an geeigneter Stelle der Wägeplattform 10 angebracht sind. Ein derartiger Aufbau der Wägeplattform und Wägezellen ist bekannt und bedarf daher hier keiner Detailerörterung.

Jeweils zwischen den Brückendiagonalen liegen die Wägezellen zwischen den Dehnungsmeßstreifen 12.1, 12.4 einerseits und 12.2, 12.3 andererseits an Speisespannungszuleitungen 13, 14 und werden über diese von einer Gleichspannungsquelle 15 mit Speisespannung versorgt. Anstelle einer Gleichspannungsversorgung könnte hier jedoch auch eine sinus- oder rechteckförmige Wechselspannung an die Wägezellen gelegt werden. In diesem Falle müßte dann ein Trägerfrequenz-Meßverfahren für die Meßsignalverarbeitung eingesetzt werden.

Die zwischen den jeweils anderen Dehnmeßstreifen 12.1, 12.2 bzw. 12.3, 12.4 der Brückenschaltungen liegenden Meßsignalausgänge 17, 18 der Wägezellen 11.1 bis 11.n sind auf Meßsignalleitungen 19, 20 und über letztere jeweils unter Zwischenschaltung von Anpassungswiderständen und Kondensatoren so auf die Eingänge einer elektronischen Verstärkerschaltung 22 einer eichfähigen Auswägevorrichtung geschaltet, daß im wesentlichen nur die statischen Anteile des Meßsignals als Meßspannung Um an deren Verstärkereingängen liegen. Eichfähige Auswägevorrichtungen dieser Art und deren Auswerteschaltungen sind ebenfalls allgemein bekannt und bedürfen daher gleichfalls keiner weiteren Erörterung.

Bei der rückwirkungsfreien analogen Schnittstelle 30 handelt es sich darum, daß auf jede Speisespannungsleitung 13, 14, die sich zwischen der Gleichspannungsquelle 15 und den Wägezellen 11.1 bis 11.n erstrecken, und auf jeden Meßsignalausgang 17, 18 einer jeden Wägezelle bzw. auf die mit den Meßsignalausgängen verbundenen Meßsignalleitungen 19, 20 über Signalwege 31 bis 34 ein Koppelverstärker 35 bis 38 mit seinem positiven Eingang 40 bis 43 geschaltet ist. Die negativen Eingänge der Koppelverstärker sind hingegen jeweils direkt auf die Verstärkerausgänge 45 bis 48 geschaltet, die ihrerseits den Anschluß einer dynamischen Auswägevorrichtung 50 mit Signalverarbeitungsgeräten für die Auswertung dynamischer Signalanteile in den Ausgangssignalen der Wägezellen vermitteln.

Die Koppelverstärker 35 bis 38, die bei dem veranschaulichten Ausführungsbeispiel als Spannungsfolger geschaltet sind, haben als nicht invertierende Verstärker hohe Eingangswiderstände von wenigstens 100 Meg-Ohm. Angesichts der Gegenkopplung dieser Spannungsfolgerschaltungen erhöhen sich deren sehr hohe Eingangswiderstände noch um den Leerlaufverstärkungsfaktor der Koppelverstärker. Damit sind bei fehlerfreier Funktion dieser Koppelverstärker Rückwirkungen der Signalverarbeitungsgeräte der dynamischen Auswägevorrichtung auf die eichfähige Auswägevorrichtung praktisch auf Null unterdrückt.

Ferner befindet sich in jedem die Speisespannungszuleitungen 13, 14 und die Meßsignalleitungen 19, 20 mit den Koppelverstärkern 35 bis 38 verbindenden Signalwegen 31 bis 34 jeweils vor dem meßseitigen Eingang 40 bis 43 eines Verstärkers ein Schutzwiderstand 52 bis 55. Diese Schutzwiderstände sind so hochohmig bemessen, daß selbst bei Kurzschluß der Eingangsklemmen des nachgeschalteten Koppelverstärkers Rückwirkungen auf die bestehende eichfähige Auswägevorrichtung 24 allenfalls zu Nullpunktsverschiebungen bzw. Empfindlichkeitsbeeinträchtigungen führen können, die höchstens ein Drittel der Fehlergrenzen der zugelassenen Auswägevorrichtung betragen.

Die Hochohmigkeit der Schutzwiderstände wird jedoch zweckmäßigerweise auf solche Widerstandswerte begrenzt, daß Störfälle, bei denen ein Kurzschluß zwischen einem Eingang 40 bis 43 der Koppelverstärker und einem ihrer Versorgungsspannungsklemmen 56 bis 59 für +Uv bzw. 60 bis 63 für -Uv noch zu einer dem Waagenbenutzer eindeutig erkennbaren und/oder von der Nullstellvorrichtung der Waage nicht mehr auf Null stellbaren Nullpunktverlagerung führt.

## Patentansprüche

1. Schnittstelle bei eichfähigen elektromechanischen Waagen für den Anschluß nicht eichfähiger und auf die Auswertung dynamischer Signalanteile in den Ausgangssignalen der Wägezellen ausgelegter Signalverarbeitungsgeräte,
dadurch gekennzeichnet,
daß die Schnittstelle (30) als rückwirkungsfreie analoge Schnittstelle ausgebildet ist, indem die Speisespannungszuleitungen (13, 14) und die Meßsignalausgänge (17, 18) aller Wägezellen (11.1 bis 11.n) einer eichfähigen Waage auf je einen Eingang eines ausgangsseitig den Anschluß nicht eichfähiger und für die Verwertung dynamischer Signalanteile geeigneter Signalverarbeitungsgeräte einer dynamischen Auswägevorrichtung (50) vermittelnden Koppelverstärker (35 bis 38) mit sehr hohem Eingangswiderstand geschaltet sind.

2. Schnittstelle nach Anspruch 1, dadurch gekennzeichnet, daß der Eingangswiderstand der Koppelverstärker (35 bis 38) der Größenordnung nach wenigstens 100 Meg-Ohm beträgt.

3. Schnittstelle nach Anspruch 1 oder 2, dadurch gekennzeichnet, daß es sich bei den Koppelverstärkern (35 bis 38) um Operationsverstärker in C-MOS Technologie handelt.

4. Schnittstelle nach einem der Ansprüche 1 bis 3, dadurch gekennzeichnet, daß die Koppelverstärker (35 bis 38) als Spannungsfolger geschaltet sind.

5. Schnittstelle nach einem der Ansprüche 1 bis 4, dadurch gekennzeichnet, daß die Koppelverstärker (35 bis 38) ausgangsseitig sehr niederohmige dynamische Innenwiderstände aufweisen.

6. Schnittstelle nach einem der Ansprüche 1 bis 5, dadurch gekennzeichnet, daß den meßseitigen Eingängen (40 bis 43) der Verstärker (35 bis 38) jeweils ein sehr hochohmiger Schutzwiderstand (52 bis 55) vorgeschaltet ist.

7. Schnittstelle nach Anspruch 6, dadurch gekennzeichnet, daß die den Koppelverstärkern (35 bis 38) meßseitig vorgeschalteten Schutzwiderstände (52 bis 55) so bemessen sind, daß selbst bei Kurzschluß der Eingangsklemmen (40 bis 43) eines nachfolgenden Koppelverstärkers etwaige Rückwirkungen auf die Auswägeeinrichtung (24) allenfalls zu Nullpunktsverschiebungen bzw. zu Empfindlichkeitsbeeinträchtigungen führen, die kleiner als ein Drittel der Fehlergrenzen der eichfähigen Auswägeeinrichtung bleiben.

8. Schnittstelle nach Anspruch 7, dadurch gekennzeichnet, daß die Schutzwiderstände (52 bis 55), die zwischen den Meßsignalausgängen (17, 18) der Wägezellen (11.1 bis 11.n) und den zugeordneten Koppelverstärkern (35 bis 38) eingeschaltet sind, in ihrer Höhe derartig begrenzte Widerstandswerte aufweisen, daß ein Kurzschluß zwischen einer Eingangsklemme (40 bis 43) eines nachfolgenden Koppelverstärkers (35 bis 38) und jeweils einer der beiden zugehörigen positiven bzw. negativen Spannungsversorgungsklemmen (56 bis 59 bzw. 60 bis 63) den Nullpunkt der eichfähigen Waage soweit verschiebt, daß diese Verschiebung dem Benutzer eindeutig erkennbar wird und/oder über den Einstellbereich der Nullstellvorrichtung dieser Waage hinausgeht.

9. Schnittstelle nach einem der Ansprüche 1 bis 8, dadurch gekennzeichnet, daß jeder Koppelverstärker (35 bis 38) mit einem Abgleichtrimmer zur Verbesserung seines Offsetverhaltens versehen ist und daß mittels dieser Abgleichtrimmer der Grundoffset der Koppelverstärker zum Verschwinden gebracht wird.
